# EUROPEAN PATENT SPECIFICATION

(11) **EP 3 866 016 B1**
(45) Date of publication and mention of the grant of the patent: **08.01.2025**
(21) Application number: 18940842.0
(22) Date of filing: 20.11.2018
(51) Int. Cl.: G06F 12/0817, G06F 3/06, G06F 12/02, G06F 12/0897

(54) **METHOD AND APPARATUS FOR DELETING INDEX ENTRY IN MEMORY**
VERFAHREN UND VORRICHTUNG ZUM LÖSCHEN EINER INDEXEINGABE IN EINEM SPEICHER
PROCÉDÉ ET APPAREIL DE SUPPRESSION D'ENTRÉE D'INDEX EN MÉMOIRE

(43) Date of publication of application: 18.08.2021
(73) Proprietor: Huawei Technologies Co., Ltd., Shenzhen, Guangdong 518129 (CN)
(72) Inventor: XIA, Fei, Shenzhen, Guangdong 518129 (CN)
(74) Representative: Pfenning, Meinig & Partner mbB
(86) International application number: PCT/CN2018/116530
(87) International publication number: WO 2020/102998

(56) References cited:
- CN-A- 104 699 727
- CN-A- 105 824 720
- CN-A- 105 975 587
- CN-A- 107 015 764
- CN-A- 107 665 098
- US-B2- 9 804 780

## Description

### TECHNICAL FIELD

This application relates to the storage field, and in particular, to a method and an apparatus for deleting indexes in an internal memory.

### BACKGROUND

Software (for example, a file system) can send an instruction by using a processor, to read data from or write data into an internal memory. The internal memory stores an index table to help search for data stored in a storage.

When cache space in the storage is insufficient, data stored in the storage cache can be deleted, and indexes in the index table in the internal memory can also be deleted.

In the prior art, it is necessary to perform a plurality of IOs to read indexes corresponding to a plurality of pieces of data cached in the storage, and delete the same indexes in the index table in the internal memory. The storage is read for quite many times, affecting overall system performance.

Therefore, how to reduce storage reads and improve system performance in a process of deleting indexes in the index table in the internal memory has become a problem to be urgently resolved at present.
US 9 804 780 B2 discloses a storage apparatus, including a first storage device; a second storage device having an access speed higher than an access speed of the first storage device; a monitor that monitors a write access load for the first storage device; a comparator that compares the write access load for the first storage device monitored by the monitor, with a load threshold; and a switch that causes write access target data to be written into the first and second storage devices, when it is determined by the comparator that the write access load for the first storage device does not exceed the load threshold, while causing the write access target data to be written into the first storage device, when it is determined by the comparator that the write access load for the first storage device exceeds the load threshold.

### SUMMARY

The invention is defined by the independent claims. Preferable embodiments are defined by the dependent claims.
This application provides a method and an apparatus for deleting indexes in an internal memory. Because all indexes in a target storage unit are consecutively rather than discretely stored, indexes corresponding to a plurality of pieces of data cached in a storage can be read through one IO, so that the same indexes in an index table in the internal memory can be deleted at a time, thereby improving deletion efficiency.

According to a first aspect, a method for deleting indexes in an internal memory is provided. The method is applied to a storage manager, and the storage manager includes the internal memory and communicates with a first storage, where the first storage records a plurality of storage units, and each storage unit includes a plurality of data blocks and an index corresponding to each of the plurality of data blocks. The internal memory stores an index table, and the index table records indexes corresponding to data blocks of the plurality of storage units. The method includes:
selecting a to-be-evicted target storage unit from the plurality of storage units;
reading all indexes in the target storage unit, where all the indexes in the target storage unit are consecutively stored in the target storage unit;
deleting all the read indexes from the index table in the internal memory; and
marking the target storage unit as empty.

With reference to the first aspect, in some implementations of the first aspect, the storage manager communicates with a second storage, and before the deleting all the read indexes from the index table in the internal memory, the method further includes:
storing a plurality of data blocks in the target storage unit into the second storage.

With reference to the first aspect, in some implementations of the first aspect, all the indexes in the target storage unit are read at a time by using a start address and a length, where the start address is a start address of all the indexes in the target storage unit, and the length is a total length of all the indexes in the target storage unit.

With reference to the first aspect, in some implementations of the first aspect, the index table in the internal memory includes a plurality of members, and the members include the index corresponding to each of the plurality of data blocks.

With reference to the first aspect, in some implementations of the first aspect, the first storage records information about the plurality of storage units, and the information includes a quantity of the storage units and/or a quantity of storage units in an empty state.

In this embodiment of this application, the information about the plurality of storage units recorded in the first storage can help the storage manager manage storage information.

According to a second aspect, an apparatus for deleting indexes in an internal memory is provided. The apparatus is applied to a storage manager, and the storage manager includes the internal memory and communicates with a first storage, where the first storage records a plurality of storage units, and each storage unit includes a plurality of data blocks and an index corresponding to each of the plurality of data blocks. The internal memory stores an index table, and the index table records indexes corresponding to data blocks of the plurality of storage units. The apparatus includes:
a selection module, configured to select a to-be-evicted target storage unit from the plurality of storage units;
a reading module, configured to read all indexes in the target storage unit, where all the indexes in the target storage unit are consecutively stored in the target storage unit;
a deletion module, configured to delete all the read indexes from the index table in the internal memory; and
a processing module, configured to mark the target storage unit as empty.

With reference to the second aspect, in some implementations of the second aspect, the storage manager communicates with a second storage, and the apparatus further includes:
a storage module, configured to store the plurality of data blocks in the target storage unit into the second storage.

With reference to the second aspect, in some implementations of the second aspect, the reading module is specifically configured to read, by using a start address and a length, all the indexes in the target storage unit at a time, where the start address is a start address of all the indexes in the target storage unit, and the length is a total length of all the indexes in the target storage unit.

With reference to the second aspect, in some implementations of the second aspect, the index table in the internal memory includes a plurality of members, and the members include the index corresponding to each of the plurality of data blocks.

With reference to the second aspect, in some implementations of the second aspect, the first storage records information about the plurality of storage units, and the information includes a quantity of the storage units and/or a quantity of storage units in an empty state.

In this embodiment of this application, the information about the plurality of storage units recorded in the first storage can help the storage manager manage storage information.

According to a third aspect, a storage manager is provided, where the storage manager includes a processor, an internal memory, and a first storage. The first storage records a plurality of storage units, and each storage unit includes a plurality of data blocks and an index corresponding to each of the plurality of data blocks. The internal memory stores an index table, and the index table records indexes corresponding to data blocks of the plurality of storage units. The internal memory stores a program, and the processor runs the program to perform the following method: selecting a to-be-evicted target storage unit from the plurality of storage units; reading all indexes in the target storage unit, where all the indexes in the target storage unit are consecutively stored in the target storage unit; deleting all the read indexes from the index table in the internal memory; and marking the target storage unit as empty.

According to a fourth aspect, a computer program product is provided, where the computer program product includes computer program code. When the computer program code is run on a computer, the computer is enabled to perform the method according to the foregoing aspects.

According to a fifth aspect, a computer readable medium is provided, where the computer readable medium stores program code. When the computer program code is run on a computer, the computer is enabled to perform the method according to the foregoing aspects.

### BRIEF DESCRIPTION OF DRAWINGS

FIG. 1 is a schematic diagram of a possible storage structure applied to embodiments of this application;
FIG. 2 is a schematic diagram of possible cache management of an SSD 130;
FIG. 3 is a schematic structural diagram of a system architecture 300 according to an embodiment of this application;
FIG. 4 is a schematic flowchart of a method for deleting indexes in an internal memory according to an embodiment of this application;
FIG. 5 is a schematic flowchart of cache recovery according to an embodiment of this application;
FIG. 6 is a schematic structural diagram of a DRAM 120 according to an embodiment of this application;
FIG. 7 is a schematic flowchart of cache data writing according to an embodiment of this application;
FIG. 8 is a schematic structural diagram of hash tables in an internal memory DRAM 120 according to an embodiment of this application;
FIG. 9 is a schematic flowchart of cache data writing according to an embodiment of this application; and
FIG. 10 is an apparatus 1000 for deleting indexes in an internal memory according to an embodiment of this application.

### DESCRIPTION OF EMBODIMENTS

The following describes the technical solutions in this application with reference to the accompanying drawings.

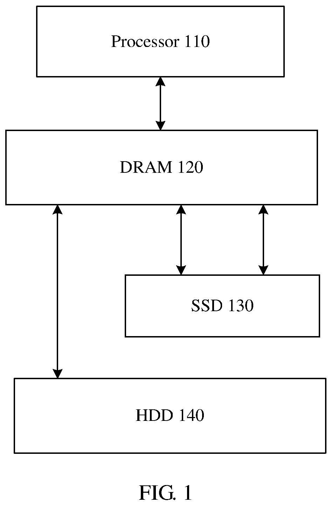

FIG. 1 is a schematic diagram of a possible storage structure applied to embodiments of this application. The storage structure may include: a processor 110, a dynamic random access memory (dynamic random access memory, DRAM) 120, a solid state disk (solid state disk, SSD) 130, and a hard disk drive (hard disk drive, HDD) 140.

The DRAM 120 may serve as a level 1 cache. A read/write latency of the SSD 130 is between those of the DRAM 120 and the HDD140, and the SSD 130 may serve as a level 2 cache.

Software (for example, a file system) can send an instruction by using the processor 110 and read data from or write data into the DRAM 120. The SSD 130 may provide the DRAM 120 with a get (get) interface, a put (put) interface, and a delete (delete) interface. After software sends a read request, data can be read from the cache. If no data is read from the DRAM 120 cache, the software can call the get interface to read data from the SSD 130 cache. If still no data is read, the software can read data from the HDD 140. After software sends a write request, data can be written into the DRAM 120 cache. If the DRAM 120 cache is full, the software can call the put interface to write the data in the DRAM 120 cache into the SSD 130. If the SSD 130 cache is full, the software can write the data from the SSD 130 to the HDD 140.

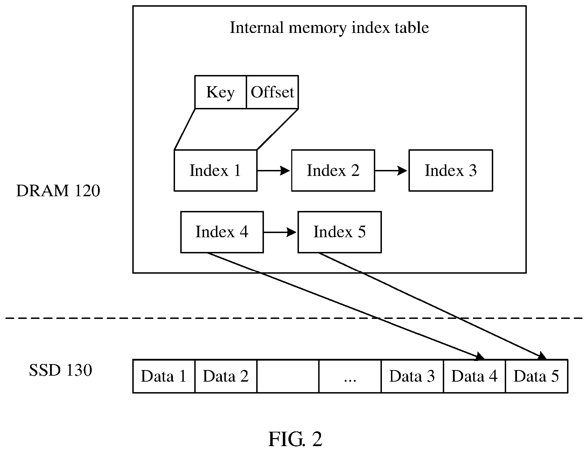

Cache management of the SSD 130 may be divided into two parts. One is data layout on the SSD 130, and the other is an internal memory index structure in the DRAM 120. In performing a read or write operation, software may look up data in the SSD 130 by using internal memory indexes in the DRAM 120. The following describes a specific implementation process of cache management of the SSD 130 in detail with reference to FIG. 2.

FIG. 2 is a schematic diagram of possible cache management of the SSD 130. FIG. 2 may include the SSD 130 and an internal memory index table in the DRAM 120.

Referring to FIG. 2, a cache management system may write data (value) into the SSD 130 and create an index table in the DRAM 120. The index table may include a plurality of indexes, and each index may include a key (key) and an offset (offset). Based on a key or an offset in a created index table, data stored in the SSD 130 can be quickly found. The key may be understood as a position of a data value in the HDD 140, and the offset may be understood as an offset of the data value in the SSD 130.

In an example, when writing data (put), the cache management system may first search the index table in the DRAM 120, and determine whether the data write operation is an update operation or a new data write operation. If an index with a key identical to that of the to-be-written data can be found in the index table in the DRAM 120, it means that the HDD 140 has stored data with the key, indicating that the write operation is an update operation. If an index with a key identical to that of the to-be-written data is not found in the index table in the DRAM 120, it means that there is no data stored with the key in the HDD 140, and that the data can be written into the SSD 130. Then, the index corresponding to the data is added to the index table in the DRAM 120.

In another example, when reading data (get), the cache management system may first search the index table in the DRAM 120. If an index with a key identical to that of the to-be-read data is found, the data can be read from the SSD 130 based on an offset. If no index with a key identical to that of the to-be-read data is found, the read fails.

In another example, the cache management system may delete data stored in the SSD 130 when cache space of the SSD 130 is insufficient. In addition, storage space occupied by the data in the SSD 130 may be set to be empty, so that the cache management system can write data in the storage space when writing data.

Specifically, the cache management system may read indexes corresponding to the data stored in the SSD 130, and delete the same indexes in the DRAM 120. In this way, when the cache management system is writing data, if an index with a key identical to that of the to-be-written data is not found in the index table in the DRAM 120, the data can be written into the SSD 130, and then indexes corresponding to the data can be added to the index table in the DRAM 120.

In the prior art, in the index table in the DRAM 120, a hash value (hashkey for short below) and an offset of a key are stored in each index, and a data block including a key and a value (KV pair for short below) can be stored in the SSD 130. In the data layout of the SSD 130, an index area is obtained through division in the SSD 130 for storing a corresponding index table in the DRAM 120, and the KV pair is stored in a data (data) area in the SSD 130.

In the prior art, when cache space of the SSD 130 is insufficient, during eviction of a plurality of KV pairs stored in the SSD 130, a plurality of input and output (input output, IO) operations are required to read indexes corresponding to the plurality of KV pairs to the DRAM 120 from the index area of the SSD 130. In addition, all read indexes may be traversed, and the corresponding indexes in the index table in the DRAM 120 may be deleted.

In the prior art, when cache space of the SSD 130 is insufficient, the plurality of indexes corresponding to the index table in the DRAM 120 can be deleted only after a plurality of read IOs with the SSD 130, thereby affecting the deletion performance.

An embodiment of this application provides a method for deleting indexes of an internal memory. The method is applied to a storage manager, where the storage manager includes the internal memory and communicates with a first storage. In this method, a plurality of corresponding indexes in the index table in the DRAM 120 can be deleted after one read IO, thereby improving performance.

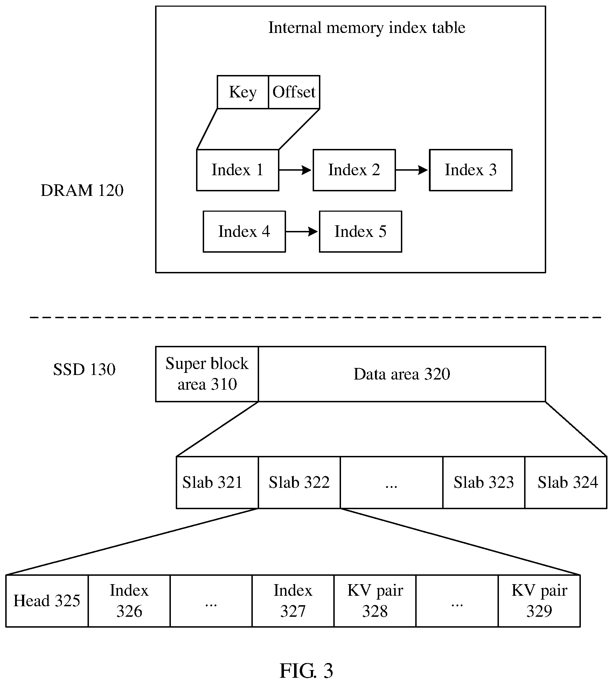

The following describes the system architecture provided in this application in detail with reference to FIG. 3 by using an example in which the first storage is an SSD 130.

FIG. 3 is a schematic structural diagram of a system architecture 300 according to an embodiment of this application. The system architecture 300 may include an internal memory DRAM 120 and the SSD 130.

The DRAM 120 may serve as a level 1 cache and can communicate with the SSD 130. An index table may be stored in the DRAM 120. The index table may record indexes corresponding to data blocks (corresponding to the KV pairs mentioned above) of a plurality of storage units in the SSD 130. A storage unit is a segment of data space that stores a plurality of pieces of data according to a specific rule.

The SSD 130 may be divided into a super block area 310 and a data area 320.

The data area 320 may be managed based on a fixed granularity. In an example, slabs (slab) may be used as storage units to manage data stored in the SSD 130. For example, a slab 321, a slab 322, a slab 323, and a slab 324 may be used. Each slab may store management information (for example, in FIG. 3, a head 325 is stored in the slab 322), a plurality of centrally stored consecutive indexes (for example, in FIG. 3, an index 326 and an index 327 are stored in the slab 322), and a plurality of stored KV pairs (for example, in FIG. 3, a KV pair 328 and a KV pair 329 are stored in the slab 322).

It should be understood that the head 325 may record necessary management information, for example, numbers of the slabs.

The super block area 310 may record related information of the SSD 130, and the related information may include but is not limited to: a total quantity of slabs in the data area 320, a quantity of empty slabs in the data area 320, and a quantity of full slabs in the data area 320.

It should be noted that an empty slab may be understood as a slab with no KV pair stored in any KV space. A full slab may be understood as a slab with KV pairs stored in all its KV space.

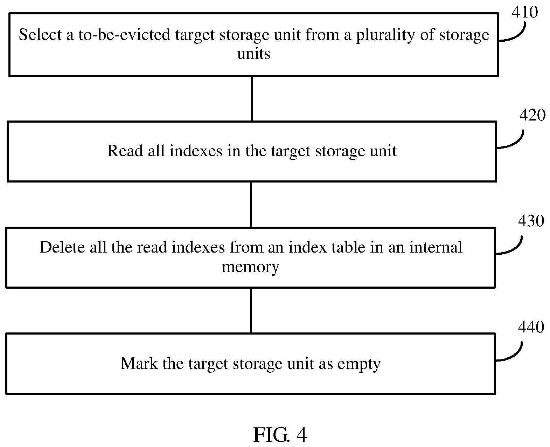

FIG. 4 is a schematic flowchart of a method for deleting indexes in an internal memory according to an embodiment of this application. The method shown in FIG. 4 may include step 410 to step 440, and the following describes step 410 to step 440 in detail.

Step 410: Select a to-be-evicted target storage unit from a plurality of storage units.

In this embodiment of this application, when a quantity of empty storage units in an SSD 130 is less than a preset threshold, an eviction process of the storage unit may be triggered.

In this embodiment of this application, no specific limitation is imposed on an implementation in which the to-be-evicted target storage unit is selected from the plurality of storage units. In an example, a least recently used (least recently used, LRU) algorithm may be used to move a data block that is stored in the SSD 130 but not frequently used out of the SSD 130, so that an internal memory occupied by the data block can be used to load another data block.

Step 420: Read all indexes in the target storage unit.

Referring to FIG. 3, in this embodiment of this application, indexes corresponding to all data blocks in the storage unit are consecutively stored in the storage unit. In this embodiment of this application, all indexes in one storage unit can be read at a time. In an example, for one read request, all indexes centrally stored in one storage unit can be read at a time based on a start address and a length. The start address may be an address of the first index in the storage unit, and the length may be a total length of all the indexes centrally stored in the storage unit.

Step 430: Delete all the read indexes from the index table in the internal memory.

In this embodiment of this application, after all the indexes centrally stored in the storage unit are read at a time, all the indexes may be traversed and corresponding indexes in the internal memory DRAM 120 may be deleted.

Step 440: Mark the target storage unit as empty.

In this embodiment of this application, after the corresponding indexes in the internal memory DRAM 120 are deleted, the target storage unit may be marked as empty. When a write request is read, data can be written into the target storage unit, and an index corresponding to the written data can be added to the index table in the DRAM 120.

In this embodiment of this application, a specific eviction manner of the data blocks stored in the target storage unit is not limited. In an example, the data may be deleted. In another example, the data may be deleted after being stored into the HDD 140. In this example, the first storage serves as a level 2 cache. Therefore, the data evicted from the SSD 130 (the first storage) needs to be permanently stored in the HDD 140 (a second storage). It should be noted that the second storage is not mandatory. For example, the SSD (the first storage) may serve as a permanent storage instead of a cache.

In this embodiment of this application, because the indexes corresponding to the data blocks are consecutively stored in one storage unit, an index corresponding to each data block in all the data blocks can be read through one IO. Therefore, a plurality of data blocks can be evicted through one IO, thereby reducing SSD reads during operation and improving system performance.

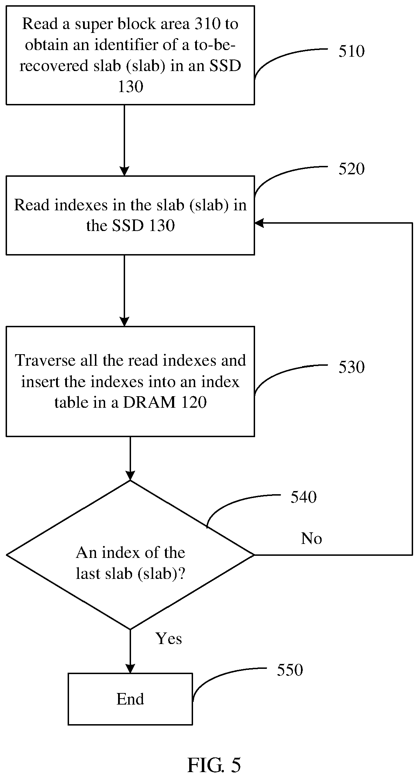

Optionally, in some embodiments, the index table cached in the DRAM 120 is lost after abnormal power outage or normal start of a node. The SSD cache management system may trigger a recovery process, to recover the indexes cached in the SSD 130 to the index table in the DRAM 120. The following describes a specific implementation process in which the cache management system performs the recovery process in detail with reference to FIG. 5.

FIG. 5 is a schematic flowchart of cache recovery according to an embodiment of this application. The method shown in FIG. 5 may include step 510 to step 560, and the following describes step 510 to step 560 in detail.

Step 510: Read a super block area 310 to obtain an identifier of a to-be-recovered slab in the SSD 130.

The SSD cache management system may trigger a cache recovery thread after abnormal power outage or normal start of a node. The recovery thread may read the super block area 310 in FIG. 3 to obtain identifiers of all to-be-recovered slabs in the SSD 130.

It should be understood that to-be-recovered indexes in the DRAM 120 are indexes corresponding to KV pairs stored in the SSD 130. Therefore, an identifier of a full slab in the SSD 130 can be determined based on information recorded in the super block area 310.

Step 520: Read indexes in the slabs in the SSD 130.

The recovery thread can read the indexes in the slabs in the SSD 130. For example, the index 326 and the index 327 stored in the slab 322 in FIG. 3 can be read.

Step 530: Traverse all the read indexes and insert the indexes into the index table in the DRAM 120.

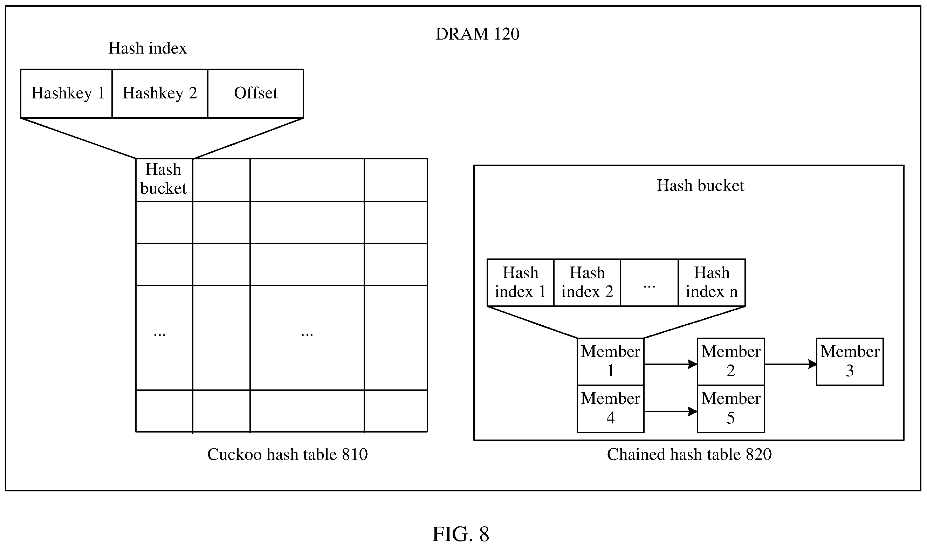

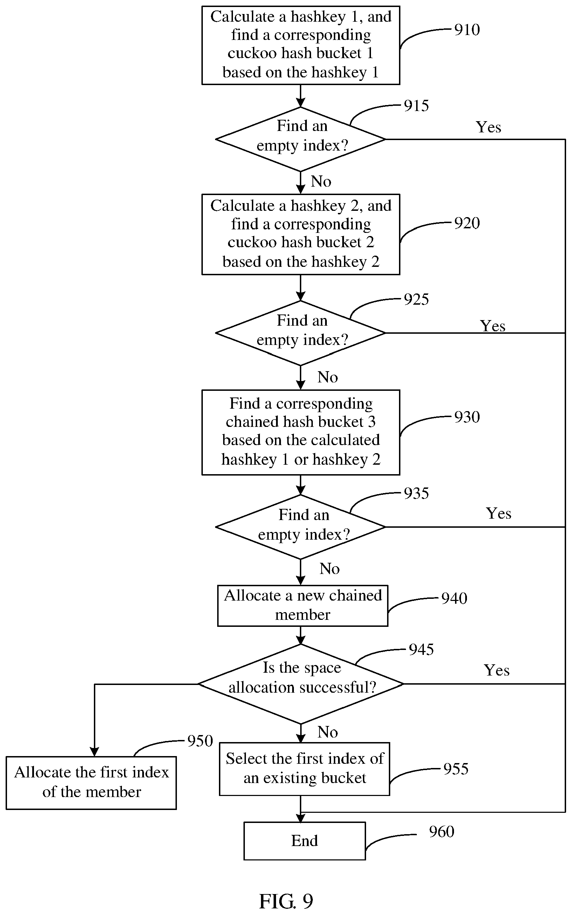

After reading the indexes in the slabs in the SSD 130 to the DRAM 120, the recovery thread may insert the read indexes into the index table in the DRAM 120. For example, the read index 326 and the read index 327 stored in the slab 322 may be inserted into the index table in the DRAM 120. The following describes a specific implementation of inserting an index into the DRAM 120 in detail with reference to FIG. 8 and FIG. 9, and details are not described herein.

Step 540: Determine whether indexes in the last slab have been read.

The recovery thread may repeat step 520 and step 530 until indexes are recovered in all slabs in the SSD 130.

If the indexes in the last to-be-recovered slab have not been read, step 520 may be performed to read the indexes in the slabs in the SSD 130.

If the indexes in the last to-be-recovered slab have been read, step 550 may be performed.

Step 550: End.

In this embodiment of this application, during cache recovery, a plurality of indexes consecutively stored in a slab can be read through only one IO, and the plurality of indexes can be recovered to the internal memory DRAM 120. Because there is no need to read all the slabs in the SSD 130, fast recovery may be implemented.

Optionally, in some embodiments, during cache data writing, data may be first aggregated in the internal memory DRAM 120 and then the aggregated data may be written into the SSD 130, thereby reducing internal garbage collection overheads of the SSD 130.

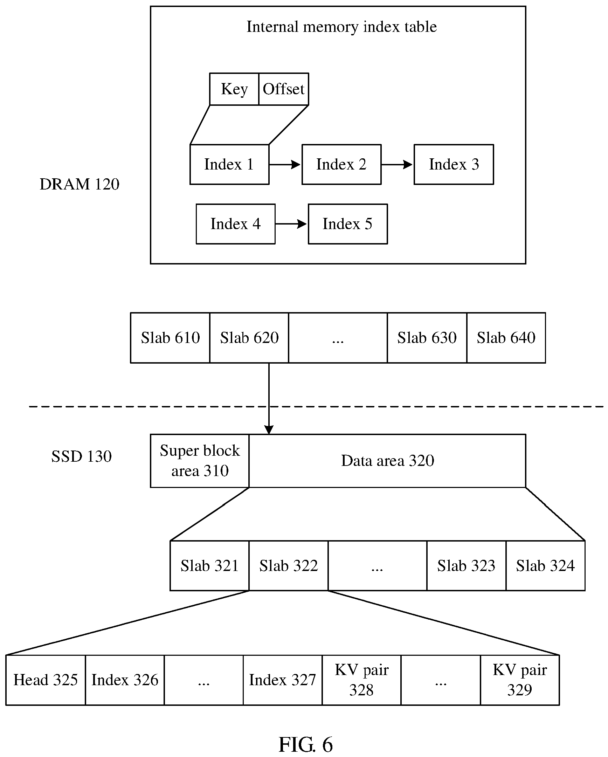

Specifically, referring to FIG. 6, in an embodiment of this application, a cache segment may be reserved in the DRAM 120, and managed based on a fixed granularity. In an example, a slab, for example, a slab 610, a slab 620, a slab 630, or a slab 640, may be used as one storage unit to manage data stored in the DRAM 120. After the written data fills up one storage unit in the DRAM 120, the data of the storage unit can be written into one storage unit in the SSD 130 at a time. For example, after the slab 620 in the DRAM 120 is fully written, data stored in the slab 620 can be written into the slab 322 in the SSD 130 at a time.

It should be understood that a slab in the SSD 130 may be categorized as follows in terms of state: an empty slab (no KV pair is stored in any KV space in the slab in the SSD 130), a full slab (KV pairs are stored in all KV space in the slab in the SSD 130), and a partially filled slab (a new KV pair in the SSD 130 can still be written into the slab).

It should be noted that a data structure of a slab in the DRAM 120 is the same as a data structure of a slab in the SSD 130. Each slab may store management information (for example, in FIG. 3, the head 325 stored in the slab 322), a plurality of centrally stored consecutive indexes (for example, in FIG. 3, the index 326 and the index 327 stored in the slab 322), and a plurality of stored KV pairs (for example, in FIG. 3, the KV pair 328 and the KV pair 329 stored in the slab 322). In an embodiment of this application, after a slab cache in the DRAM 120 is full, all data stored in the slab in the DRAM 120 can be written into a slab in the SSD 130.

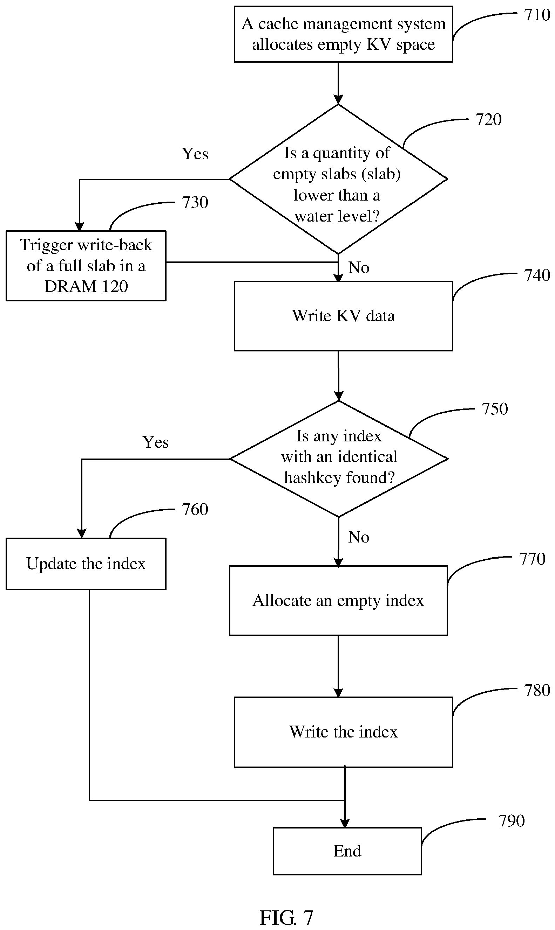

The following describes a specific implementation process of cache data writing in the embodiments of this application in more detail with reference to FIG. 7. It should be noted that the example of FIG. 7 is provided merely for helping a person skilled in the art understand the embodiments of this application rather than limiting the embodiments of this application to a specific value or a specific scenario shown in FIG. 7. A person skilled in the art can definitely make various equivalent modifications or changes based on the example shown in FIG. 7, and such modifications or changes shall also fall within the scope of the embodiments of this application.

FIG. 7 is a schematic flowchart of cache data writing according to an embodiment of this application. The method shown in FIG. 7 may include step 710 to step 790, and the following describes step 710 to step 790 in detail.

Step 710: A cache management system allocates empty KV space.

The cache management system may allocate storage space for to-be-written data when writing data. The cache management system may first attempt to allocate storage space for data from a partially filled slab in the DRAM 120. If there is no partially filled slab in the DRAM 120, the storage space may be allocated for data from an empty slab in the DRAM 120, and the empty slab may be set to a partially filled state.

Step 720: The cache management system determines whether a quantity of empty slabs in the DRAM 120 is lower than a water level.

The cache management system may check the quantity of empty slabs in the DRAM 120 after the to-be-written data is stored into the internal memory DRAM 120.

If the cache management system determines that the quantity of empty slabs in the DRAM 120 is less than the water level (the water level may be a preset quantity of empty slabs), it indicates that cache space in the DRAM 120 is insufficient, and data stored in a full slab in the DRAM 120 needs to be written into a slab in the SSD 130. In this case, step 730 may be performed.

If the cache management system determines that the quantity of empty slabs in the DRAM 120 is not lower than the water level, step 740 may be performed.

Step 730: Trigger write-back of a full slab in the DRAM 120.

If the cache management system determines that the cache space in the DRAM 120 is insufficient, data stored in a full slab in the DRAM 120 can be written into a slab in the SSD 130. The full slab in the DRAM 120 may be set as an empty slab, and newly written data can continue to be cached in the empty slab.

Step 740: Write KV data.

If the cache management system determines that the quantity of empty slabs in the DRAM 120 is not lower than the water level, written KV data can be cached in the allocated KV space in the DRAM 120.

Step 750: Determine whether any index with an identical hashkey is found.

The cache management system may search the index table in the DRAM 120 after caching the written data in the DRAM 120.

If an index with a key identical to that of the to-be-written data can be found in the index table in the DRAM 120, it means that the HDD 140 has stored data with the key, indicating that the write operation is an update operation. In this case, step 760 may be performed.

If an index with a key identical to that of the to-be-written data is not found in the index table in the DRAM 120, it means that the HDD 140 has not stored data with the key, indicating that the write operation is a new data write operation. In this case, step 770 may be performed.

Step 760: Update the index.

After determining that the write operation is an update operation, the cache management system may use the new index corresponding to the newly written data to update the original index in the DRAM 120.

Step 770: Allocate an empty index.

After determining that the write operation is a new data write operation, the cache management system may allocate empty index space to the newly written data from the index table in the DRAM 120. For a specific implementation in which a new index is inserted into the index table in the DRAM 120, refer to the description of FIG. 8 and FIG. 9. Details are not described herein.

Step 780: Write the index.

After the empty index space is allocated to the newly written data, the index corresponding to the newly written data may be stored into the empty index space.

Step 790: End.

In this embodiment of this application, an aggregate write request may be used to store the to-be-written data into the internal memory DRAM 120 at a granularity of one storage unit. Then, aggregated data may be written into the SSD 130, thereby reducing internal garbage collection overheads of the SSD 130.

Optionally, in some embodiments, in a process of inserting a new index into the index table in the DRAM 120, an empty index needs to be allocated, and a new index can be written into the empty index. A hash index table is used as an example of the index table. In an embodiment of this application, an empty index may first be allocated to the new index from a cuckoo hash table. If there is no empty index that can be allocated in the cuckoo hash table, an empty index may be allocated to the new index from a chained hash table.

FIG. 8 is a schematic structural diagram of hash tables in an internal memory DRAM 120 according to an embodiment of this application. The hash tables shown in FIG. 8 may include a cuckoo hash table 810 and a chained hash table 820.

The cuckoo hash table 810 may include a plurality of hash buckets, and each hash bucket may include an array of a plurality of indexes. The index may record hashkeys (for example, a hashkey 1 and a hashkey 2) respectively calculated by two hash functions for a key, and an offset of a KV pair in the SSD 130.

The chained hash table 820 may include a plurality of hash buckets, and each hash bucket includes a plurality of members (member). Each member has at least one pointer pointing to a next member (the pointer may even be a bidirectional pointer). Each member includes an array of one or more hash indexes, and each hash index records a hashkey and an offset.

In a traditional chained hash table, one member includes one hash index, and each hash index has at least one pointer pointing to a next hash index, leading to relatively high internal memory overheads. In the chained hash table in this embodiment of this application, each member of a hash bucket stores a plurality of indexes, thereby reducing pointer overheads, and in turn reducing internal memory space overheads of the hash table.

The following describes a specific implementation in which a new index is inserted into the index table in the DRAM 120 in the embodiments of this application in more detail with reference to FIG. 9. It should be noted that the example of FIG. 9 is provided merely for helping a person skilled in the art understand the embodiments of this application rather than limiting the embodiments of this application to a specific value or a specific scenario shown in FIG. 9. A person skilled in the art can definitely make various equivalent modifications or changes based on the example shown in FIG. 9, and such modifications or changes shall also fall within the scope of the embodiments of this application.

FIG. 9 is a schematic flowchart of cache data writing according to an embodiment of this application. The method shown in FIG. 9 may include step 910 to step 960, and the following describes step 910 to step 960 in detail.

Step 910: Calculate a hashkey 1, and find a corresponding cuckoo hash bucket 1 based on the hashkey 1.

A cache management system may calculate the hashkey 1 based on the first hash function. In addition, the corresponding cuckoo hash bucket 1 can be found based on the hashkey 1. For example, a modulo operation may be performed on a value of the hashkey 1, and the corresponding cuckoo hash bucket 1 can be found based on a result of the processing.

Step 915: Traverse the cuckoo hash bucket 1 to determine whether an empty index can be found.

The cache management system may find the corresponding cuckoo hash bucket 1 based on the hashkey 1, and may traverse the cuckoo hash bucket 1 to determine whether there is an empty index in the hash bucket 1.

If an empty index can be found in the hash bucket 1, step 960 is performed.

If no empty index is found in the hash bucket 1, step 920 may be performed.

Step 920: Calculate a hashkey 2, and find a corresponding cuckoo hash bucket 2 based on the hashkey 2.

The cache management system may calculate the hashkey 2 by using a second hash function. In addition, the corresponding cuckoo hash bucket 2 can be found based on the hashkey 1. For example, a modulo operation may be performed on a value of the hashkey 2, and the corresponding cuckoo hash bucket 2 can be found based on a result of the processing.

Step 925: Traverse the cuckoo hash bucket 2 to determine whether an empty index can be found.

The cache management system may find the corresponding cuckoo hash bucket 2 based on the hashkey 2. The cuckoo hash bucket 2 may be traversed to determine whether there is an empty index in the hash bucket 2.

If an empty index can be found in the hash bucket 2, step 960 is performed.

If no empty index is found in the hash bucket 2, step 930 may be performed.

Step 930: Find a corresponding chained hash bucket 3 based on the calculated hashkey 1 or hashkey 2.

After failing to find any empty index in the cuckoo hash bucket, the cache management system may find the corresponding chained hash bucket 3 in the chained hash table based on the calculated hashkey 1 or hashkey 2, and allocate an empty index in the chained hash bucket 3.

Step 935: Traverse every member of the chained hash bucket 3 to determine whether an empty index can be found.

The cache management system may find a corresponding chained hash bucket 3 in the chained hash table based on the hashkey 1 or the hashkey 2. In addition, every member of the chained hash bucket 3 may be traversed to determine whether an empty index can be found.

If an empty index can be found in the chained hash bucket 3, step 960 is performed.

If no empty index is found in the chained hash bucket 3, step 940 may be performed.

Step 940: Allocate a new chained member.

If the cache management system fails to find any empty index in the chained hash bucket 3, a new member can be allocated in the chained hash bucket 3.

Step 945: Determine whether space allocation is successful.

After allocating a new member in the chained hash bucket 3, the cache management system may determine whether the member is successfully allocated.

If the allocation is successful, step 950 may be performed.

If the allocation is unsuccessful, step 955 may be performed.

Step 950: Allocate the first index of the member.

If the cache management system successfully allocates a member in the chained hash bucket 3, the cache management system may store a new index into first empty index space of the member.

Step 955: Select the first index of an existing bucket.

If the cache management system fails to allocate a member in the chained hash bucket 3, the cache management system may store a new index into the first index of the existing bucket. The new index may also be stored into other index space based on the index stored in the first index of the existing bucket.

Step 960: End.

The method for deleting indexes in an internal memory provided in the embodiments of this application is described in detail above with reference to FIG. 1 to FIG. 9. The following describes an embodiment of an apparatus of this application in detail. It should be understood that the description of the method embodiments corresponds to the description of the apparatus embodiment, and therefore, for a part that is not described in detail, reference may be made to the foregoing method embodiments.

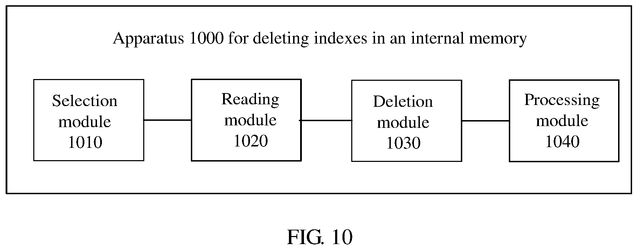

FIG. 10 shows an apparatus 1000 for deleting indexes in an internal memory according to an embodiment of this application. The apparatus 1000 may include: a selection module 1010, a reading module 1020, a deletion module 1030, and a processing module 1040.

The selection module 1010 is configured to select a to-be-evicted target storage unit from a plurality of storage units.

The reading module 1020 is configured to read all indexes in the target storage unit, where all the indexes in the target storage unit are consecutively stored in the target storage unit.

The deletion module 1030 is configured to delete all the read indexes from an index table in the internal memory.

The processing module 1040 is configured to mark the target storage unit as empty.

Optionally, in some embodiments, the apparatus further includes: a storage module, configured to store a plurality of data blocks in the target storage unit into the HDD.

Optionally, in some embodiments, the reading module is specifically configured to read, by using a start address and a length, all the indexes in the target storage unit at a time, where the start address is a start address of all the indexes in the target storage unit, and the length is a total length of all the indexes in the target storage unit.

Optionally, in some embodiments, the index table in the internal memory includes a plurality of members, and the members include an index corresponding to each of the plurality of data blocks.

Optionally, in some embodiments, the first storage records information about the plurality of storage units, and the information includes a quantity of the storage units and/or a quantity of storage units in an empty state.

An embodiment of this application further provides a computer program product, where the computer program product includes computer program code. When the computer program code is run on a computer, the computer is enabled to perform the method according to the foregoing aspects.

An embodiment of this application further provides a computer readable medium, where the computer readable medium stores program code. When the computer program code is run on a computer, the computer is enabled to perform the method according to the foregoing aspects.

The aspects or features of this application may be implemented as a method, an apparatus, or a product that uses standard programming and/or engineering technologies. The term "product" used in this application covers computer programs that can be accessed from any computer readable device, carrier, or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card, and a flash memory device (for example, an erasable programmable read-only memory (erasable programmable read-only memory, EPROM), a card, a stick, or a key drive). In addition, the various storage media described in this specification may represent one or more devices and/or other machine-readable media for storing information. The term "machine-readable media" may include but is not limited to a radio channel, and various other media that can store, contain, and/or carry an instruction and/or data.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, and may be implemented in electrical, mechanical, or other forms.

The units described as separate parts may or may not be physically separate. Parts displayed as units may or may not be physical units, and may be located in one position or distributed on a plurality of network units. Some or all of the units may be selected based on actual requirements to achieve the objectives of the solutions of the embodiments.

In addition, functional units in these embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A method for deleting indexes in an internal memory, applied to a storage manager, wherein the storage manager comprises the internal memory and communicates with a first storage, wherein the first storage records a plurality of storage units, each storage unit comprises a plurality of data blocks and an index corresponding to each of the plurality of data blocks, the internal memory stores an index table, and the index table records indexes corresponding to data blocks of the plurality of storage units; and the method comprises:
selecting (410) a to-be-evicted target storage unit from the plurality of storage units;
reading (420) all indexes in the target storage unit through one I/O request;
deleting (430) all the read indexes from the index table in the internal memory; and
marking (440) the target storage unit as empty;
wherein all the indexes in the target storage unit are consecutively stored in the target storage unit.

2. The method according to claim 1, wherein the storage manager communicates with a second storage, and before the deleting all the read indexes from the index table in the internal memory, the method further comprises:
storing a plurality of data blocks in the target storage unit into the second storage.

3. The method according to claims 1 or 2, wherein the reading all indexes in the target storage unit comprises:
reading, by using a start address and a length, all the indexes in the target storage unit at a time, wherein the start address is a start address of a first index in the target storage unit, and the length is a total length of all the indexes in the target storage unit.

4. The method according to any one of claims 1 to 3, wherein the index table in the internal memory comprises a plurality of members, and the members comprise the index corresponding to each of the plurality of data blocks.

5. The method according to any one of claims 1 to 4, wherein the first storage records information about the plurality of storage units, and the information comprises a quantity of the storage units and/or a quantity of storage units in an empty state.

6. An apparatus (1000) for deleting indexes in an internal memory, applied to a storage manager, wherein the storage manager comprises the internal memory and communicates with a first storage, the first storage records a plurality of storage units, each storage unit comprises a plurality of data blocks and an index corresponding to each of the plurality of data blocks, the internal memory stores an index table, and the index table records indexes corresponding to data blocks of the plurality of storage units; and the apparatus comprises:
a selection module (1010), configured to select a to-be-evicted target storage unit from the plurality of storage units;
a reading module (1020), configured to read all indexes in the target storage unit through one I/O request;
a deletion module (1030), configured to delete all the read indexes from the index table in the internal memory; and
a processing module (1040), configured to mark the target storage unit as empty;
wherein all the indexes in the target storage unit are consecutively stored in the target storage unit.

7. The apparatus (1000) according to claim 6, wherein the storage manager communicates with a second storage, and the apparatus further comprises:
a storage module, configured to store a plurality of data blocks in the target storage unit into the second storage.

8. The apparatus (1000) according to claims 6 or 7, wherein the reading module (1020) is specifically configured to:
read, by using a start address and a length, all the indexes in the target storage unit at a time, wherein the start address is a start address of a first index in the target storage unit, and the length is a total length of all the indexes in the target storage unit.

9. The apparatus (1000) according to any one of claims 6 to 8, wherein the index table in the internal memory comprises a plurality of members, and the members comprise an index corresponding to each of the plurality of data blocks.

10. The apparatus (1000) according to any one of claims 6 to 9, wherein the first storage records information about the plurality of storage units, and the information comprises a quantity of the storage units and/or a quantity of storage units in an empty state.

11. A computer storage medium, comprising a computer program, wherein when the computer program is run on a computer, the computer is enabled to perform the method according to any one of claims 1 to 5.

12. A computer program product, comprising a computer program, wherein when the computer program is run on a computer, the computer is enabled to perform the method according to any one of claims 1 to 5.

## Patentansprüche

1. Verfahren zum Löschen von Indizes in einem internen Speicher, angewandt auf einen Speichermanager, wobei der Speichermanager den internen Speicher umfasst und mit einem ersten Speicher kommuniziert, wobei der erste Speicher eine Mehrzahl von Speichereinheiten aufzeichnet, jede Speichereinheit eine Mehrzahl von Datenblöcken und einen jedem der Mehrzahl von Datenblöcken entsprechenden Index umfasst, der interne Speicher eine Indextabelle speichert und die Indextabelle Indizes aufzeichnet, die Datenblöcken der Mehrzahl von Speichereinheiten entsprechen; und das Verfahren umfasst:
Auswählen (410) einer auszuquartierenden Zielspeichereinheit aus der Mehrzahl von Speichereinheiten;
Lesen (420) aller Indizes in der Zielspeichereinheit durch eine E/A-Anforderung;
Löschen (430) aller gelesenen Indizes aus der Indextabelle im internen Speicher; und Markieren (440) der Zielspeichereinheit als leer;
wobei alle Indizes in der Zielspeichereinheit aufeinanderfolgend in der Zielspeichereinheit gespeichert werden.

2. Verfahren nach Anspruch 1, wobei der Speichermanager mit einem zweiten Speicher kommuniziert, und das Verfahren vor dem Löschen aller gelesenen Indizes aus der Indextabelle im internen Speicher ferner umfasst: Speichern einer Mehrzahl von Datenblöcken in der Zielspeichereinheit in dem zweiten Speicher.

3. Verfahren nach Anspruch 1 oder 2, wobei das Lesen aller Indizes in der Zielspeichereinheit umfasst:
Lesen, unter Verwendung einer Startadresse und einer Länge, aller Indizes in der Zielspeichereinheit zu einer Zeit, wobei die Startadresse eine Startadresse eines ersten Index in der Zielspeichereinheit ist und die Länge eine Gesamtlänge aller Indizes in der Zielspeichereinheit ist.

4. Verfahren nach einem der Ansprüche 1 bis 3, wobei die Indextabelle im internen Speicher eine Mehrzahl von Elementen umfasst und die Elemente den jedem der Mehrzahl von Datenblöcken entsprechenden Index umfassen.

5. Verfahren nach einem der Ansprüche 1 bis 4, wobei der erste Speicher Informationen über die Mehrzahl von Speichereinheiten aufzeichnet und die Informationen eine Anzahl der Speichereinheiten und/oder eine Anzahl von Speichereinheiten in einem leeren Zustand umfassen.

6. Vorrichtung (1000) zum Löschen von Indizes in einem internen Speicher, angewandt auf einen Speichermanager, wobei der Speichermanager den internen Speicher umfasst und mit einem ersten Speicher kommuniziert, der erste Speicher eine Mehrzahl von Speichereinheiten aufzeichnet, jede Speichereinheit eine Mehrzahl von Datenblöcken und einen jedem der Mehrzahl von Datenblöcken entsprechenden Index umfasst, der interne Speicher eine Indextabelle speichert und die Indextabelle Indizes aufzeichnet, die Datenblöcken der Mehrzahl von Speichereinheiten entsprechen; und die Vorrichtung umfasst:
ein Auswahlmodul (1010), das dazu konfiguriert ist, eine auszuquartierende Zielspeichereinheit aus der Mehrzahl von Speichereinheiten auszuwählen;
ein Lesemodul (1020), das dazu konfiguriert ist, alle Indizes in der Zielspeichereinheit durch eine E/A-Anforderung zu lesen;
ein Löschmodul (1030), das dazu konfiguriert ist, alle gelesenen Indizes aus der Indextabelle im internen Speicher zu löschen; und
ein Verarbeitungsmodul (1040), das dazu konfiguriert ist, die Zielspeichereinheit als leer zu markieren;
wobei alle Indizes in der Zielspeichereinheit aufeinanderfolgend in der Zielspeichereinheit gespeichert werden.

7. Vorrichtung (1000) nach Anspruch 6, wobei der Speichermanager mit einem zweiten Speicher kommuniziert, und die Vorrichtung ferner umfasst:
ein Speichermodul, das dazu konfiguriert ist, eine Mehrzahl von Datenblöcken in der Zielspeichereinheit in dem zweiten Speicher zu speichern.

8. Vorrichtung (1000) nach Anspruch 6 oder 7, wobei das Lesemodul (1020) insbesondere dazu konfiguriert ist:
unter Verwendung einer Startadresse und einer Länge, alle Indizes in der Zielspeichereinheit zu einer Zeit zu lesen, wobei die Startadresse eine Startadresse eines ersten Index in der Zielspeichereinheit ist und die Länge eine Gesamtlänge aller Indizes in der Zielspeichereinheit ist.

9. Vorrichtung (1000) nach einem der Ansprüche 6 bis 8, wobei die Indextabelle im internen Speicher eine Mehrzahl von Elementen umfasst und die Elemente einen jedem der Mehrzahl von Datenblöcken entsprechenden Index umfassen.

10. Vorrichtung (1000) nach einem der Ansprüche 6 bis 9, wobei der erste Speicher Informationen über die Mehrzahl von Speichereinheiten aufzeichnet und die Informationen eine Anzahl der Speichereinheiten und/oder eine Anzahl von Speichereinheiten in einem leeren Zustand umfassen.

11. Computerspeichermedium, das ein Computerprogramm umfasst, wobei, wenn das Computerprogramm auf einem Computer ausgeführt wird, der Computer in die Lage versetzt wird, das Verfahren nach einem der Ansprüche 1 bis 5 durchzuführen.

12. Computerprogrammprodukt, das ein Computerprogramm umfasst, wobei, wenn das Computerprogramm auf einem Computer ausgeführt wird, der Computer in die Lage versetzt wird, das Verfahren nach einem der Ansprüche 1 bis 5 durchzuführen.

## Revendications

1. Procédé de suppression d'index dans une mémoire interne, appliqué à un gestionnaire de stockage, le gestionnaire de stockage comprenant la mémoire interne et communiquant avec un premier stockage, le premier stockage enregistrant une pluralité d'unités de stockage, chaque unité de stockage comprenant une pluralité de blocs de données et un index correspondant à chacun de la pluralité de blocs de données, la mémoire interne stockant une table d'index, et la table d'index enregistrant des index correspondant à des blocs de données de la pluralité d'unités de stockage ; et le procédé comprenant :
la sélection (410) d'une unité de stockage cible à éliminer parmi la pluralité d'unités de stockage ;
la lecture (420) de tous les index dans l'unité de stockage cible au moyen d'une requête d'entrée/sortie ;
la suppression (430) de tous les index lus de la table d'index dans la mémoire interne ; et
le marquage (440) de l'unité de stockage cible comme étant vide ;
tous les index dans l'unité de stockage cible étant consécutivement stockés dans l'unité de stockage cible.

2. Procédé selon la revendication 1, le gestionnaire de stockage communiquant avec un second stockage, et avant la suppression de tous les index lus de la table d'index dans la mémoire interne, le procédé comprenant en outre :
le stockage d'une pluralité de blocs de données dans l'unité de stockage cible dans le second stockage.

3. Procédé selon les revendications 1 ou 2, la lecture de tous les index dans l'unité de stockage cible comprenant :
la lecture, en utilisant une adresse de départ et une longueur, de tous les index dans l'unité de stockage cible à la fois, l'adresse de départ étant une adresse de départ d'un premier index dans l'unité de stockage cible, et la longueur étant une longueur totale de tous les index dans l'unité de stockage cible.

4. Procédé selon l'une quelconque des revendications 1 à 3, la table d'index dans la mémoire interne comprenant une pluralité d'éléments, et les éléments comprenant l'index correspondant à chacun de la pluralité de blocs de données.

5. Procédé selon l'une quelconque des revendications 1 à 4, la première mémoire enregistrant des informations sur la pluralité d'unités de stockage, et les informations comprenant une quantité des unités de stockage et/ou une quantité d'unités de stockage dans un état vide.

6. Appareil (1000) de suppression d'index dans une mémoire interne, appliqué à un gestionnaire de stockage, le gestionnaire de stockage comprenant la mémoire interne et communiquant avec un premier stockage, le premier stockage enregistrant une pluralité d'unités de stockage, chaque unité de stockage comprenant une pluralité de blocs de données et un index correspondant à chacun de la pluralité de blocs de données, la mémoire interne stockant une table d'index, et la table d'index enregistrant des index correspondant à des blocs de données de la pluralité d'unités de stockage ; et l'appareil comprenant :
un module de sélection (1010), configuré pour sélectionner une unité de stockage cible à éliminer parmi la pluralité d'unités de stockage ;
un module de lecture (1020), configuré pour lire tous les index dans l'unité de stockage cible au moyen d'une requête d'E/S ;
un module de suppression (1030), configuré pour supprimer tous les index lus de la table d'index dans la mémoire interne ; et
un module de traitement (1040), configuré pour marquer l'unité de stockage cible comme étant vide ;
tous les index dans l'unité de stockage cible étant consécutivement stockés dans l'unité de stockage cible.

7. Appareil (1000) selon la revendication 6, le gestionnaire de stockage communiquant avec un second stockage, et l'appareil comprenant en outre :
un module de stockage, configuré pour stocker une pluralité de blocs de données dans l'unité de stockage cible dans le second stockage.

8. Appareil (1000) selon les revendications 6 ou 7, le module de lecture (1020) étant spécifiquement configuré pour :
lire, en utilisant une adresse de départ et une longueur, tous les index dans l'unité de stockage cible à la fois, l'adresse de départ étant une adresse de départ d'un premier index dans l'unité de stockage cible, et la longueur étant une longueur totale de tous les index dans l'unité de stockage cible.

9. Appareil (1000) selon l'une quelconque des revendications 6 à 8, la table d'index dans la mémoire interne comprenant une pluralité d'éléments, et les éléments comprenant un index correspondant à chacun de la pluralité de blocs de données.

10. Appareil (1000) selon l'une quelconque des revendications 6 à 9, la première mémoire enregistrant des informations sur la pluralité d'unités de stockage, et les informations comprenant une quantité des unités de stockage et/ou une quantité d'unités de stockage dans un état vide.

11. Support de stockage informatique, comprenant un programme informatique, lorsque le programme informatique est exécuté sur un ordinateur, l'ordinateur étant en mesure de réaliser le procédé selon l'une quelconque des revendications 1 à 5.

12. Produit de programme informatique, comprenant un programme informatique, lorsque le programme informatique est exécuté sur un ordinateur, l'ordinateur étant en mesure de réaliser le procédé selon l'une quelconque des revendications 1 à 5.
